**Europäisches Patentamt**

**European Patent Office**

**Office européen des brevets**

(11) Veröffentlichungsnummer: **0 223 870
B1**

(12) **EUROPÄISCHE PATENTSCHRIFT**

(45) Veröffentlichungstag der Patentschrift:
**27.09.89**

(21) Anmeldenummer: **85114827.0**

(22) Anmeldetag: **22.11.85**

(51) Int. Cl.⁴: **F16H 55/56, F16H 13/14**

(54) Stufenlos einstellbares Zugmittelgetriebe.

(43) Veröffentlichungstag der Anmeldung:
**03.06.87 Patentblatt 87/23**

(45) Bekanntmachung des Hinweises auf die Patenterteilung:
**27.09.89 Patentblatt 89/39**

(84) Benannte Vertragsstaaten:
**DE FR GB IT**

(56) Entgegenhaltungen:
**DE-A- 1 500 371
DE-C- 518 151
FR-A- 2 027 644
FR-A- 2 235 313
US-A- 2 563 896
US-A- 2 672 761**

(73) Patentinhaber: **DEERE & COMPANY, 1 John Deere Road,
Moline Illinois 61265(US)**

(72) Erfinder: **Kempf, Bernd, Friedhofstrasse 10,
D-6661 Althornbach(DE)**
Erfinder: **Rabung, Karl, Dorfstrasse 2,
D-6657 Gersheim(DE)**

(74) Vertreter: **Feldmann, Bernhard et al, DEERE &
COMPANY European Office, Patent Department
Steubenstrasse 36-42 Postfach 503,
D-6800 Mannheim 1(DE)**

## Beschreibung

Die Erfindung bezieht sich auf ein stufenlos einstellbares Zugmittelgetriebe, insbesondere für Landmaschinen, mit einer eingangsseitigen und einer ausgangsseitigen Zugmittelscheibe und einer in ihrem wirksamen Durchmesser veränderbaren, an einem schwenkbaren Tragarm gelagerten Doppelscheibe, die zwei auf wenigstens einer Nabe fest angeordnete endseitige Scheibenhälften und zwei auf der Nabe axial verstellbare mittige Scheibenhälften aufweist.

Bei diesem bekannten Zugmittelgetriebe für Mähdrescher (DE-C 1 500 371) ist die in ihrem wirksamen Durchmesser veränderbare Doppelscheibe als Doppelkeilriemenscheibe ausgebildet, so daß sich bei ihrer Verschwenkung durch den Tragarm der wirksame Durchmesser der einen Keilriemenscheibe verringert und der wirksame Durchmesser der anderen Keilriemenscheibe zwangsläufig vergrößert. In Abhängigkeit von der Stellung der Doppelscheibe wird zwangsläufig die ausgangsseitige Zugmittelscheibe ebenfalls in ihrem wirksamen Durchmesser verändert, um eine ausreichende Riemenspannung zu erhalten. Die Verstellung der Doppelscheibe mit dem Tragarm dient zur Veränderung des Übersetzungsverhältnisses des Zugmittelgetriebes für den Antrieb des Mähdreschers. Im ganzen gesehen ist mit diesem Zugmittelgetriebe nur ein begrenztes Moment übertragbar, weshalb es sich nur für kleinere Maschinen eignet.

Bei einem weiteren bekannten ebenfalls für den Fahrantrieb eines Mähdreschers vorgesehenen Zugmittelgetriebe (DE-C 2 422 221) sind bereits Vorkehrungen getroffen worden, damit sich die Riemenspannung dem bei größeren Maschinen zu übertragenden Moment anpaßt. Im einzelnen ist eine in ihrem Durchmesser unveränderbare, mit einer Brennkraftmaschine verbundene eingangsseitige Zugmittelscheibe und eine mit einem Getriebe verbundene, in ihrem wirksamen Durchmesser veränderbare ausgangsseitige Zugmittelscheibe vorgesehen, die jeweils über endlose Riemen mit einer Doppelscheibe zum Verändern des Übersetzungsverhältnisses in Verbindung stehen. Der von der Brennkraftmaschine über die eingangsseitige Zugmittelscheibe angetriebene Riemen arbeitet mit Scheibenhälften auf der Doppelscheibe zusammen, deren wirksamer Durchmesser nicht veränderbar ist, so daß der getriebeeingangsseitige Teil des Zugmittelgetriebes in seinem Übersetzungsverhältnis nicht veränderbar ist. Auf der Doppelscheibe sitzt aber noch eine axial einstellbare Scheibenhälfte, die mit einer axial nicht einstellbaren Scheibenhälfte zusammenarbeitet und über einen weiteren Riemen die ausgangsseitige Zugmittelscheibe antreibt. Letztere weist eine Scheibenhälfte auf, die in Abhängigkeit von einer Drehmomenterhöhung sich über eine Nockensteuerung entgegen der Wirkung einer Feder in axialer Richtung verstellt. Mit dieser drehmomentabhängigen Zugmittelscheibe wird die Riemenspannung im gesamten Zugmittelgetriebe automatisch vergrößert, wenn das Drehmoment sich vergrößert. Ebenso wird die Riemenspannung automatisch verkleinert, wenn das Drehmoment sich verringert. Natürlich ist diese Bauform kostenmäßig aufwendig und war daher nur den größeren Mähdreschertypen vorbehalten.

Auch ist eine nicht verschwenkbare Zwischenscheibe bekannt (US-A 2 672 761), die das Drehmoment von einer eingangsseitigen einstellbaren Kegelscheibe über Zugmittel auf eine zweite einstellbare ausgangsseitige Kegelscheibe überträgt. Eine Mittelscheibe der Zwischenscheibe besteht dabei aus zwei Scheibenhälften, die axial gegeneinander über eine Anpreßfeder abgestützt sind und bei einer Übersetzungseinstellung gemeinsam vom Riemen axial verstellt werden.

Auch ist es bei einem Reibradgetriebe nicht mehr neu (US-A 2 563 896), auf einem verlagerbaren Schlitten angeordnete Zwischenscheiben vorzusehen, die mit drehmomentabhängigen Anpreßeinrichtungen versehen sind.

Die mit der Erfindung zu lösende Aufgabe wird darin gesehen, das gattungsmäßige kostengünstige Zugmittelgetriebe so auszubilden, daß auch große Drehmomentspitzen, die beispielsweise beim Arbeiten in schwierigem Gelände oder beim Anfahren auftreten können, aufgefangen werden, ohne daß das Zugmittel durchrutscht. Die Aufgabe ist nach der Erfindung dadurch gelöst worden, daß die mittigen Scheibenhälften getrennt und über miteinander in Eingriff stehende und gegeneinander verschiebbare Nockenelemente verbindbar sind, wobei die zweite der mittigen Scheibenhälften gegenüber der ersten mittigen Scheibenhälfte verdrehbar gelagert ist.

Auf diese Weise wird, sobald ein Riemen bei Drehmomentspitzen zu rutschen beginnt, auf der Doppelscheibe eine der mittigen Scheibenhälften gegenüber der anderen verdreht, wodurch sich infolge der vorgesehenen Nockenelemente der Abstand zwischen den mittigen Scheibenhälften vergrößert, der Spalt für den Riemen bzw. das Zugmittel sich einengt und der Riemen in Abhängigkeit vom Drehmoment sich spannt.

Vorteilhaft ist es, daß die Nockenelemente jeweils auf sich gegenüberliegenden Stirnseiten der verstellbaren mittigen Scheibenhälften ringförmig und koaxial zur Welle angeordnet sind und daß die erste mittige Scheibenhälfte über eine Verzahnung mit der die Zugmittelscheibe vervollständigenden endseitigen Scheibenhälfte drehfest verbunden ist, während die zweite mittige Scheibenhälfte auf der Nabe mittel- oder unmittelbar drehbar gelagert ist. Durch die Verwendung zweier Scheibenhälften, die stirnseitig mit in Eingriff bringbaren Nockenelementen ausgerüstet sind, läßt sich auf einfache Weise in Abhängigkeit von den Drehmomentenkräften die Zugmittelscheibe beispielsweise in axialer Richtung verstellen und somit die Innenoberflächen der Scheibenhälften gegen die Außenseiten des Zugmittels drücken, so daß somit auch die Anpreßkraft auf das Zugmittel gesteigert wird. Hierdurch läßt sich ein größeres Drehmoment mittels der Zugmittelscheibe übertragen und damit der Schlupf klein halten. Hierzu ist es vorteilhaft, daß die zweite mittige Scheibenhälfte auf einer Nabe der ersten mittigen Scheibenhälfte drehbar und axial verstellbar gelagert ist und daß die zweite mittige Scheibenhälfte bei Vergrößerung des axialen Abstandes gegenüber der ersten, mittigen Scheibenhälfte durch einen Sicherungsring in der axialen Bewegung begrenzt ist. Durch die Verwendung eines Sicherungsringes wird verhindert, daß die mittlere Scheibenhälfte zu weit nach einer Seite verstellt wird, wenn beispielsweise eine ungleichmäßige Belastung an den Zugmitteln auftritt.

Damit die einzelnen Nockenelemente bei Beschädigung leichter ausgewechselt werden können, ist es vorteilhaft, daß die Nockenelemente über Schraubenbolzen mit den jeweiligen Stirnseiten der beiden mittigen Scheibenhälften lösbar verbunden sind. Vorteilhaft ist es ferner, daß die Nockenelemente eine im Längsquerschnitt pyramidenstumpfförmige Formgebung aufweisen und daß die zweite mittige Scheibenhälfte gegen die Wirkung einer Feder verstellbar ist. Durch die Verwendung einer Feder wird bei Anfahren des Zugmittelgetriebes der erforderliche Reibdruck am Zugmittel erzeugt, so daß auch beim Anfahren des Zugmittelgetriebes der Schlupf klein gehalten werden kann.

In weiterer Ausgestaltung der Erfindung ist es vorteilhaft, daß die an die Stirnseiten mittigen Scheibenhälften angeschlossenen Nockenelemente einen einteiligen Nockenring bilden und daß die sich gegenseitig berührenden Nockenflächen der Nockenelemente mit der zugehörigen Außenseite, die gegen die Stirnfläche der Scheibenhälfte anliegt, einen Winkel zwischen 35° und 45° bilden.

Im folgenden wird die Erfindung anhand von lediglich einen Ausführungsweg darstellenden Zeichnungen näher erläutert.

Es zeigt:

Fig. 1 eine Teilansicht einer Erntemaschine, beispielsweise eines Mähdreschers, mit einem stufenlos einstellbaren Zugmittelgetriebe für den Fahrantrieb,

Fig. 2 das Zugmittelgetriebe gemäß Fig. 1,

Fig. 3 eine Schnittdarstellung der Doppelscheibe des Zugmittelgetriebes,

Fig. 4 eine Seitenansicht der einen Scheibenhälfte der Doppelscheibe,

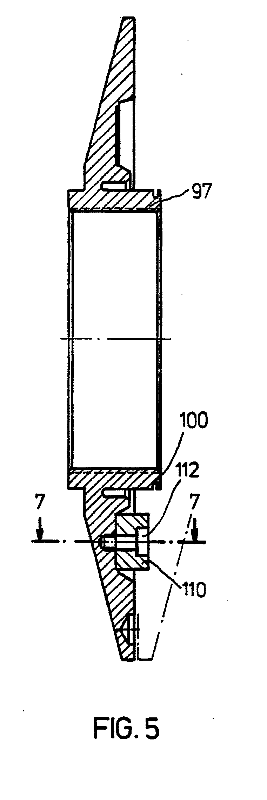

Fig. 5 einen Schnitt entlang der Linie 5–5 gemäß Fig. 4,

Fig. 6 eine Schnittdarstellung eines einzelnen Nockenelementes entlang der Linie 8–8 gemäß Fig. 8, das auf der Stirnfläche der Scheibenhälfte befestigbar ist,

Fig. 7 eine Abwicklung einiger ineinandergreifen der Nockenelemente in der Ansicht entlang der Linie 7–7 gemäß Fig. 5,

Fig. 8 eine Draufsicht des Nockenelementes gemäß Fig. 5.

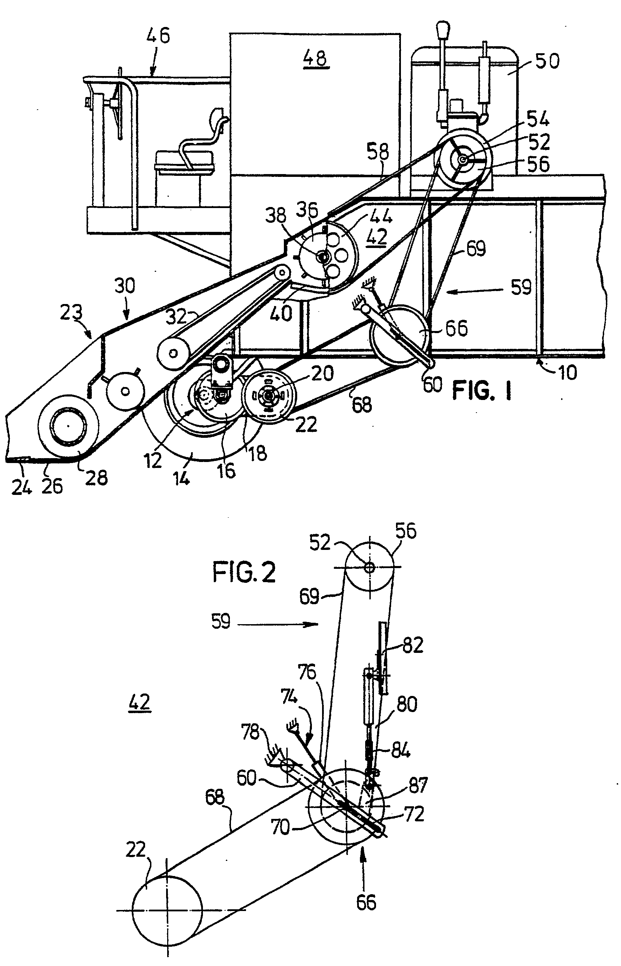

In Fig. 1 der Zeichnung ist ein Mähdrescher 10 nur teilweise dargestellt, an dessen vorderer Treibachse 12 Laufräder 14 angeordnet sind. Der Einfachheit halber ist in der Zeichnung nur das rechte vordere Laufrad 14 dargestellt. An der Treibachse 12 sind ein Differentialgetriebe 16 und ein ein Wechselgetriebe aufnehmendes Getriebegehäuse 18 angeordnet, mit dem von einer eine getriebene Zugmittelscheibe 22 aufnehmenden Achse 20 ausgehend verschiedene Geschwindigkeitsbereiche einstellbar sind. Am vorderen Ende des Mähdreschers befindet sich eine Erntebergungsvorrichtung 23, die aus einem Schneidwerk 24, einem Schneidwerksboden 26 sowie einer Einzugsschnecke 28 besteht, über die das aufgenommene Erntegut in ein einen Elevatorförderer 32 aufweisendes Schrägfördergehäuse 30 geleitet wird. Der Elevatorförderer 32 führt das Erntegut einer Dreschtrommel 36 zu, die auf einer Welle 38 drehbar gelagert ist. Unterhalb der Dreschtrommel 36 befindet sich ein Dreschkorb 40. Die Welle 38 der Dreschtrommel 36 lagert in Seitenwänden 42 des Mähdreschers 10. Auf dem einen äußeren Ende der Welle 38 befindet sich eine Antriebsscheibe 44, die über ein Zugmittel 58 mit einer Zugmittelscheibe 54 antriebsverbunden ist. Die Zugmittelscheibe 54 sowie eine neben dieser angeordnete Zugmittelscheibe 56 lagern auf einer Welle 52 einer Brennkraftmaschine 50. Die Brennkraftmaschine 50 befindet sich hinter einem am Mähdrescher 10 vorgesehenen Sammelbehälter 48. Vor dem Sammelbehälter 48 befindet sich ein Bedienungsstand 46.

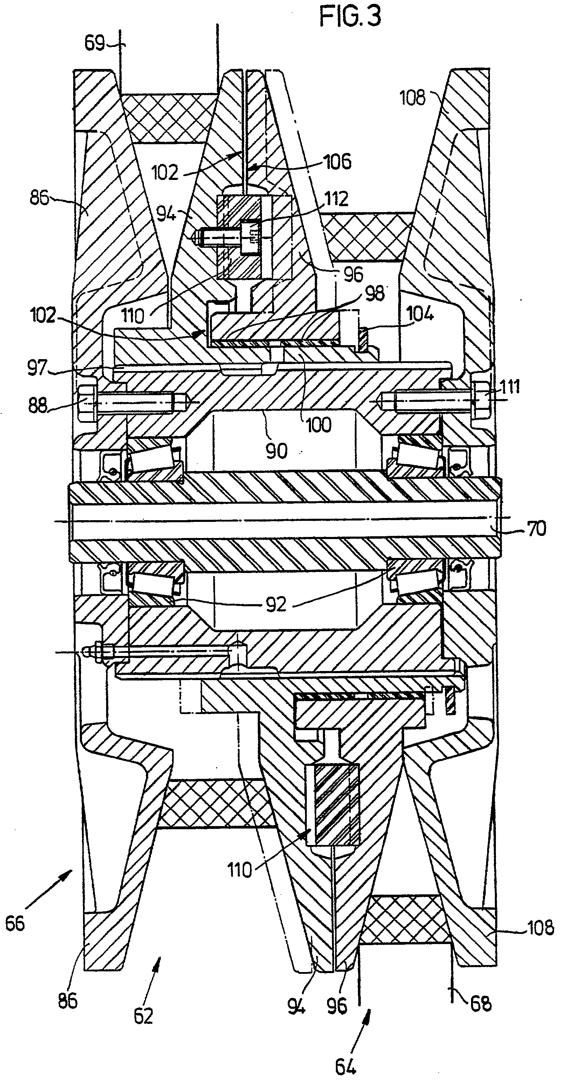

Die Treibachse 12 des Mähdreschers 10 und somit die Laufräder 14 werden von einem stufenlos einstellbaren Zugmittelgetriebe 59 angetrieben. Das Zugmittelgetriebe 59 (siehe Fig. 1 und 2) besteht aus der auf der Welle 52 angeordneten Zugmittelscheibe 56, einer auf einem schwenkbar angeordneten Tragarm 60 angeordneten, aus zwei Keilriemenscheiben gebildeten Doppelscheibe 66 sowie der vierten Zugmittelscheibe 22. Die Zugmittelscheibe 56 steht über ein Zugmittel 69 mit der einen Zugmittelscheibe 62 (Fig. 3) der Doppelscheibe 66 in Antriebsverbindung, während ihre zweite Zugmittelscheibe 64 über ein Zugmittel 68 mit der Zugmittelscheibe 22 antriebsverbunden ist.

Wie aus Fig. 2 hervorgeht, ist die Doppelscheibe 66 mittels einer Welle 70 in einer im Tragarm 60 vorgesehenen Langlochöffnung 72 verschiebbar angeordnet. An die Welle 70 greift eine Riemenspannvorrichtung an, die aus einer einstellbaren Spannmutter 74 besteht, die einenends an die Seitenwand 42 angeschlossen und anderenends in einer Spannhülse 76 drehbar aufgenommen ist. Die Spannhülse 76 ist mit der Welle 70 verbunden. Durch Drehen der Spannmutter 74 kann die Doppelscheibe 66 in der Langlochöffnung 72 verschoben werden und somit die notwendige Riemenspannung für das Zugmittelgetriebe 59 eingestellt werden. Der Tragarm 60 ist an eine an der Seitenwand 42 angeordnete Halterung 78 schwenkbar angeschlossen. Zur Verschwenkung des Tragarmes 60 ist ein hydraulisch beaufschlagbarer Stellzylinder 80 vorgesehen, der mit seinem einen Ende an einer an der Seitenwand 42 vorgesehenen Halterung 82 und anderenends mit seiner Kolbenstange 84 an einen Hebelarm 87 angreift, der mit dem Tragarm 60 fest verbunden ist. Durch Ein- und Ausfahren der Kolbenstange 84 des Stellzylinders 80 läßt sich der Tragarm 60 verschwenken und somit die wirksamen Durchmesser der beiden Zugmittelscheiben 62 und 64 entsprechend verändern.

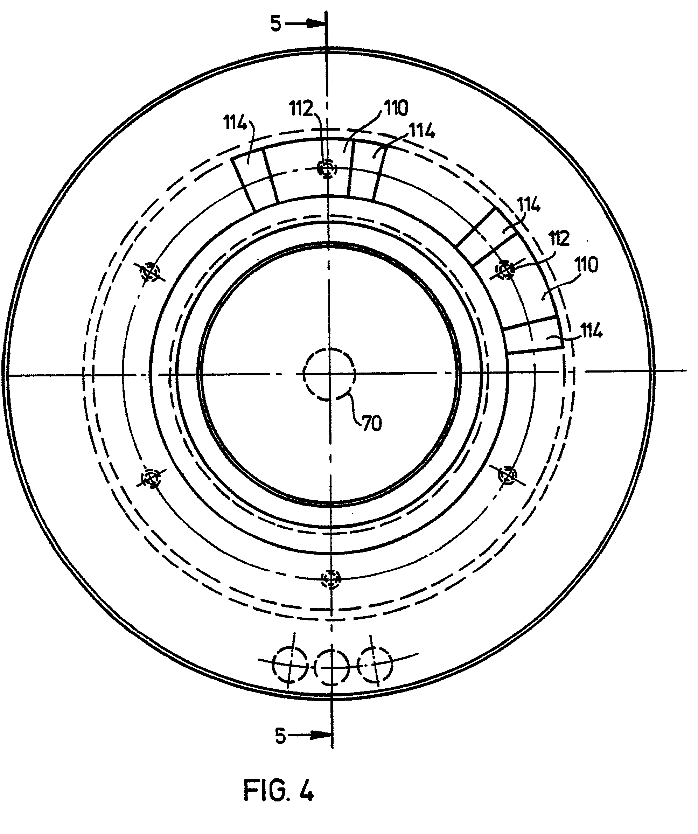

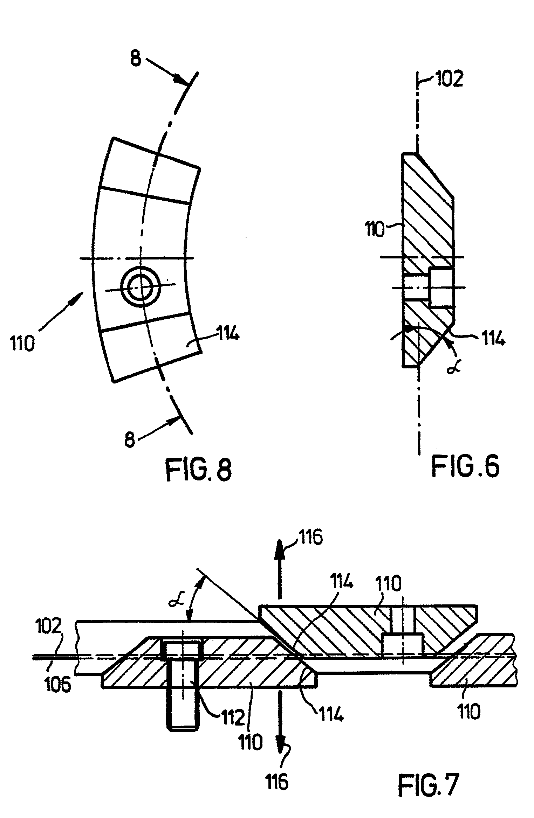

Die Doppelscheibe 66 besteht, wie bereits erwähnt, aus den beiden Zugmittelscheiben 62 und 64 (Fig. 3). Die Zugmittelscheibe 62 weist eine äußere Scheibenhälfte 86 auf, die über Schraubenbolzen 88 an eine Nabe 90 drehfest angeschlossen ist. Die Nabe 90 lagert mittels rechter und linker Wälzlager 92 auf der Welle 70. Die linke Zugmittelscheibe 62 weist ferner eine mittlere Scheibenhälfte 94 auf, die über eine Keilverzahnung 97 mit der Nabe 90 drehfest verbunden ist, jedoch derart, daß sie auf der Nabe axial verstellbar ist. An die mittlere Scheibenhälfte 94 schließt sich eine zweite mittlere Scheibenhälfte 96 an, die Teil der Zugmittelscheibe 64 ist. Die zweite mittlere Scheibenhälfte 96 lagert mittels einer Buchse 98 auf einer Nabe 100, die fest mit der ersten Scheibenhälfte 94 verbunden ist. Auf diese Weise läßt sich die zweite Scheibenhälfte 96 gegenüber der ersten Scheibenhälfte 94 drehen sowie sich in Axialrichtung verstellen. Die Axialverstellung der zweiten Scheibenhälfte 96 nach links wird durch eine innenliegende Stirnseite 102 der ersten Scheibenhälfte 94 und die Axialverstellung nach rechts durch einen Sicherungsring 104 begrenzt, der am äußeren Ende der Nabe 100 vorgesehen ist. Die Stirnseite 102 der linken Scheibenhälfte 94 weist einen geringfügigen Abstand zur Stirnseite 106 der rechten Scheibenhälfte 96 auf. Die rechte Zugmittelscheibe 64 wird durch eine außenliegende vierte Scheibenhälfte 108 vervollständigt, die über Schraubenbolzen 112 mit der Nabe 90 drehfest verbunden ist. Damit eine Antriebsverbindung zwischen der linken Zugmittelscheibe 62 und der rechten Zugmittelscheibe 64 hergestellt werden kann, sind die beiden mittleren Scheibenhälften 94 und 96 über zahlreiche Nockenelemente 110 miteinander antriebsverbunden. Das Nockenelement 110 besteht gemäß Fig. 4 und 8 aus einem Kreisbogensegment, das mit weiteren Nockenelementen 110 einen Kreisbogen bildet, der koaxial zur Welle 70 angeordnet ist. Die einzelnen Nockenelemente 110 sind über Schraubenbolzen 112 mit der Stirnseite 102 der einen Scheibenhälfte 94 und der Stirnseite 106 der anderen Scheibenhälfte 96 lösbar verbunden. Die Nockenelemente 110 (siehe Fig. 6 und 7) weisen geneigt verlaufende Nockenflächen 114 auf, die mit der Stirnseite 102 der Scheibenhälfte 94 bzw. der Stirnseite 106 der Scheibenhälfte 96 einen Winkel $\alpha$ bilden, der vorzugsweise 40° aufweist. Es ist jedoch auch möglich, daß der Winkel $\alpha$ eine Größe zwischen 35° und 45° haben kann.

Im Arbeitseinsatz wird mittels der Brennkraftmaschine 50 über das Zugmittelgetriebe 59 die Achse 20 angetrieben und somit die Laufräder 14. Die für den Antrieb erforderliche Zugmittelspannung der beiden Zugmittel 68 und 69 läßt sich durch Verschieben der Doppelscheibe 66 auf dem Tragarm 60 einstellen. Hierdurch läßt sich bei normalem Arbeitseinsatz über die Doppelscheibe 66 das Antriebsmoment von der einen Zugmittelscheibe 62 ohne weiteres auf die andere Zugmittelscheibe 64 übertragen. Treten andererseits beispielsweise bei Bergfahrten des Mähdreschers 10, Drehmomentspitzen auf und beginnt ein Riemen zu rutschen, so werden die beiden Scheibenhälften 94 und 96 und somit die entsprechenden Nockenelemente 110 gegenseitig verschoben. Dabei gleitet das untere Nockenelement 110 gemäß Fig. 7 an dem oberen Nockenelement 110 entlang, so daß sich beide Nockenelemente bei geringfügiger Drehung um die Welle 70 in Axialrichtung gemäß Pfeil 116 verschieben. Hierdurch werden die Scheibenhälften 94 und 96 in Richtung der außenliegenden Stirnkanten der Zugmittel 68 und 69 bewegt und somit der Anpreßdruck zwischen den Stirnkanten der Zugmittel und der Innenoberfläche der Scheibenhälften 94 und 96 erhöht. Durch den höheren Anpreßdruck läßt sich nunmehr auch ein größer auftretendes Drehmoment ohne weiteres übertragen. Bei nachlassendem Drehmoment können die beiden Scheibenhälften 94 und 96 sich wieder aufeinander zubewegen, so daß der Reibdruck entsprechend dem nachlassenden Drehmoment verringert wird. Auf diese Weise läßt sich mit einfachen baulichen Mitteln insbesondere an der Doppelscheibe, an der normalerweise der größte Schlupf auftritt, die notwendige Zugmittelspannung entsprechend dem auftretenden Drehmoment während des Arbeitseinsatzes automatisch einstellen.

Das zuvor beschriebene Zugmittelgetriebe 59 mit der vorteilhaft ausgebildeten Doppelscheibe 66 läßt sich auch bei allen anderen Arbeitsmaschinen ohne weiteres einsetzen, die ungleichmäßigen Belastungsarten ausgesetzt sind, um somit für die Antriebsübertragung die gewünschte bzw. erforderliche Riemenspannng in optimaler Weise zur Verfügung zu stellen. Hierdurch läßt sich der Verschleiß an den Zugmitteln auf ein Minimum reduzieren, da der Schlupf an den Zugmittelscheiben klein gehalten werden kann.

## Patentansprüche

1. Stufenlos einstellbares Zugmittelgetriebe (59), insbesondere für Landmaschinen, mit einer eingangsseitigen und einer ausgangsseitigen Zugmittelscheibe (56, 22) und einer in ihrem wirksamen Durchmesser veränderbaren, an einem schwenkbaren Tragarm (60) gelagerten Doppelscheibe, die zwei auf wenigstens einer Nabe (90) fest angeordnete endseitige Scheibenhälften (86, 108) und zwei auf der Nabe (90) axial verstellbare mittige Scheibenhälften (94, 96) aufweist, dadurch gekennzeichnet, daß die mittigen Scheibenhälften (94, 96) getrennt und über miteinander in Eingriff stehende und gegeneinander verschiebbare Nockenelemente (110) verbindbar sind, wobei die zweite der mittigen Scheibenhälften (94 bzw. 96) gegenüber der ersten mittigen Scheibenhälfte (96 bzw. 94) verdrehbar gelagert ist.

2. Zugmittelgetriebe nach Anspruch 1, dadurch gekennzeichnet, daß die Nockenelemente (110) jeweils auf den sich gegenüberliegenden Stirnseiten (102, 106) der verstellbaren mittigen Scheibenhälften (94, 96) ringförmig und koaxial zur Nabe (90) angeordnet sind.

3. Zugmittelgetriebe nach Anspruch 1 oder 2, dadurch gekennzeichnet, daß die erste mittige Scheibenhälfte (94) über eine Verzahnung (97) mit der die Zugmittelscheibe (62) vervollständigenden endseitigen Scheibenhälfte (86) drehfest verbunden ist, während die zweite mittige Scheibenhälfte (96) auf der Nabe (90) mittel- oder unmittelbar drehbar gelagert ist.

4. Zugmittelgetriebe nach Anspruch 3, dadurch gekennzeichnet, daß die zweite mittige Scheibenhälfte (96) auf einer Nabe (100) der ersten mittigen Scheibenhälfte (94) drehbar und axial verstellbar gelagert ist.

5. Zugmittelgetriebe nach einem oder mehreren der vorherigen Ansprüche, dadurch gekennzeichnet, daß die zweite mittige Scheibenhälfte (96) bei Vergrößerung des axialen Abstandes gegenüber der ersten mittigen Scheibenhälfte (94) durch einen Sicherungsring (104) in der axialen Bewegung begrenzt ist.

6. Zugmittelgetriebe nach einem oder mehreren der vorherigen Ansprüche, dadurch gekennzeichnet, daß die Nockenelemente (110) über Schraubenbolzen (112) mit den jeweiligen Stirnseiten (102, 106) der beiden mittigen Scheibenhälften (94, 96) lösbar verbunden sind.

7. Zugmittelgetriebe nach einem oder mehreren der vorherigen Ansprüche, dadurch gekennzeichnet, daß die Nockenelemente (110) eine im Längsquerschnitt pyramidenstumpfförmige Formgebung aufweisen.

8. Zugmittelgetriebe nach einem oder mehreren der vorherigen Ansprüche, dadurch gekennzeichnet, daß die zweite mittige Scheibenhälfte (96) gegen die Wirkung einer Feder verstellbar ist.

9. Zugmittelgetriebe nach einem oder mehreren der vorherigen Ansprüche, daß die an den Stirnseiten (102, 106) der mittigen Scheibenhälften, (94, 96) angeschlossenen Nockenelemente (110) einen einteiligen Nockenring bilden.

10. Zugmittelgetriebe nach einem oder mehreren der vorherigen Ansprüche, dadurch gekennzeichnet, daß die sich gegenseitig berührenden Nockenflächen (114) der Nockenelemente (110) mit der zugehörigen Außenseite, die gegen die Stirnfläche (102, 106) der Scheibenhälfte (96, 94) anliegt, einen Winkel (α), zwischen 35° und 45° bilden.

**Claims**

1. A continuously variable belt drive (59), in particular for agricultural machines, comprising belt pulleys (56, 22) at the input side and the output side, and a double pulley which is variable in its effective diameter and which is mounted on a pivotable carrier arm (60), the double pulley comprising two pulley halves (86, 108) which are fixedly arranged at the ends on at least one hub (90) and two central pulley halves (94, 96) which are axially displaceable on the hub (90), characterised in that the central pulley halves (94, 96) are separate and can be connected by way of cam elements (110) which are in engagement with each other and which are displaceable relative to each other, wherein the second of the central pulley halves (94 or 96) is mounted rotatably relative to the first central pulley half (96 or 94 respectively).

2. A belt drive according to claim 1 characterised in that the cam elements (110) are respectively arranged on the mutually oppositely disposed faces (102, 106) of the displaceable central pulley halves (94, 96) in an annular array and coaxially with respect to the hub (90).

3. A belt drive according to claim 1 or claim 2 characterised in that the first central pulley half (94) is non-rotatably connected by way of a tooth arrangement (97) to the end pulley half (86) which completes the belt pulley (62) while the second central pulley half (96) is directly or indirectly mounted rotatably on the hub (90).

4. A belt drive according to claim 3 characterised in that the second central pulley half (96) is mounted rotatably and axially displaceably on a hub (100) of the first central pulley half )94).

5. A belt drive according to one or more of the preceding claims characterised in that upon an increase in the axial distance relative to the first central pulley half (94) the second central pulley half (96) is restricted in its axial movement by a securing ring (104).

6. A belt drive according to one or more of the preceding claims characterised in that the cam elements (110) are releasably connected by way of screw bolts (112) to the respective faces (102, 106) of the two central pulley halves (94, 96).

7. A belt drive according to one or more of the preceding claims characterised in that the cam elements (110) are of a configuration in the form of a truncated pyramid in longitudinal section.

8. A belt drive according to one or more of the preceding claims characterised in that the second central pulley half (96) is displaceable against the force of a spring.

9. A belt drive according to one or more of the preceding claims characterised in that the cam elements (110) connected to the faces (102, 106) of the central pulley halves (94, 96) form a one-piece cam ring.

10. A belt drive according to one or more of the preceding claims characterised in that the cam surfaces (114) of the cam elements (110), which are in contact with each other, form an angle α of between 35° and 45° with the respective outward side which bears against the face (102, 106) of the pulley (96, 94).

**Revendications**

1. Variateur de vitesse continu à courroie (59), en particulier pour machines agricoles, comportant une poulie située côté entrée et une poulie située côté sortie (56, 22) et une poulie double de diamètre effectif variable, placée sur un bras de support pivotant (60), qui comprend deux demi-poulies terminales (86, 108) placées fixe sur au moins un moyeu (90) et deux demi-poulies centrales (94, 96) déplaçables axialement sur le moyeu (90), caractérisé en ce que les demi-poulies centrales (94, 96) sont séparées et peuvent être reliées au moyen d'éléments à came (110) entrant en prise mutuelle et mutuellement déplaçables, la seconde des demi-poulies centrales (94, respectivement 96) étant placée de façon à pouvoir tourner par rapport à la première demi-poulie centrale (96, respectivement 94).

2. Variateur suivant la revendication 1, caractérisé en ce que les éléments à came (110) sont disposés chacun annulairement et coaxialement par rapport au moyeu (90) sur les faces frontales opposées (102, 106), des demi-poulies centrales déplaçables (94, 96).

3. Variateur suivant la revendication 1 ou 2, caractérisé en ce que la première demi-poulie centrale (94) est solidarisée en rotation par une denture (97) à la demi-poulie terminale (86) complétant la poulie (62), tandis que la seconde demi-poulie centrale (96) est placée sur le moyeu (90) de façon à pouvoir tourner indirectement ou directement.

4. Variateur suivant la revendication 3, caractérisé en ce que la seconde demi-poulie centrale (96) est placée sur un moyeu (100) de la première demi-poulie centrale (94) de façon à pouvoir tourner et se déplacer axialement.

5. Variateur suivant une ou plusieurs des revendications précédentes, caractérisé en ce que la seconde demi-poulie centrale (96) est, lors de l'augmentation de la distance axiale par rapport à la première demi-poulie centrale (94), limitée en ce qui concerne le déplacement axial par un circlip (104).

6. Variateur suivant une ou plusieurs des revendications précédentes, caractérisé en ce que les éléments à came (110) sont reliés de façon amovible, par des boulons (112), aux faces frontales respectives (102, 106) des deux demi-poulies centrales (94, 96).

7. Variateur suivant une ou plusieurs des revendications précédentes, caractérisé en ce que les éléments à came (110) présentent une conformation en forme de pyramide tronquée en coupe longitudinale.

8. Variateur suivant une ou plusieurs des revendications précédentes, caractérisé en ce que la seconde demi-poulie centrale (96) peut être déplacée contre l'action d'un ressort.

9. Variateur suivant une ou plusieurs des revendications précédentes, caractérisé en ce que les éléments à came (110) raccordés aux faces frontales (102, 106) des demi-poulies centrales (94, 96) forment un anneau à came d'une seule pièce.

10. Variateur suivant une ou plusieurs des revendications précédentes, caractérisé en ce que les surfaces de came en contact mutuel (114) des éléments à came (110) font, avec la face extérieure correspondante qui est en contact avec la surface frontale (102, 106) de la demi-came (96, 94), un angle (α) compris entre 35° et 45°.

EP 0 223 870 B1

FIG. I

FIG. 2

EP 0 223 870 B1

FIG.3

FIG. 4

FIG. 5

FIG.8

FIG.6

FIG.7